# EUROPÄISCHE PATENTANMELDUNG

(11) **EP 2 347 997 A2**
(43) Veröffentlichungstag der Anmeldung: **27.07.2011**
(21) Anmeldenummer: 10181285.7
(22) Anmeldetag: 08.08.2000
(51) Int. Cl.: C01B 39/00, B01J 29/04

(54) **Verfahren zur Herstellung eines kristallinen, zeolithischen Feststoffs**

(30) Priorität: 20.08.1999 DE 19939416
(62) Teilanmeldung aus: 00962299.4
(71) Anmelder: BASF SE, 67056 Ludwigshafen (DE)
(72) Erfinder: Müller, Ulrich, 67435, Neustadt (DE); Hill, Friedrich, 67149, Meckenheim (DE); Rieber, Norbert, 68259, Mannheim (DE)
(74) Vertreter: Altmann, Andreas

(57) **Zusammenfassung**

Kristalliner Feststoffes, umfassend mindestens ein zeolithisches Material, bei dem der Feststoff aus mindestens einer Vorläuferverbindung kristallisiert wird und der Reaktionsaustrag der Kristallisation direkt einer Trocknung zugeführt wird, wobei das mindestens eine zeolithische Material ein Ti-Zeolith ist.

## Beschreibung

Die vorliegende Erfindung betrifft ein verbessertes Verfahren zur Herstellung eines kristallinen Feststoffs, umfassend mindestens ein zeolithisches Material, wobei der Reaktionsaustrag der Kristallisation direkt und ohne Abtrennung irgendwelcher Bestandteile einer kontinuierlich durchgeführten Trocknung zugeführt wird, den so hergestellten Feststoff an sich sowie dessen Verwendung als Katalysator, als Trägermaterial für Katalysatoren, als Sorptionsmittel, als Pigment oder als Füllstoff für Kunststoffe, insbesondere zur Herstellung von Epoxiden aus Olefinen, dabei wiederum die Herstellung von Propylenoxid ausgehend von Propen unter Einsatz eines Hydroperoxids, insbesondere H₂O₂.

Zeolithe sind bekanntermaßen kristalline Alumosilikate mit geordneten Kanal-und Käfigstrukturen, deren Porenöffnungen im Bereich von Mikroporen kleiner 0,9 nm liegen. Das Netzwerk solcher Zeolithe ist aufgebaut aus SiO₄⁻ und AlO₄⁻-Tetraedern, die über gemeinsame Sauerstoffbrücken verbunden sind. Eine Übersicht der bekannten Strukturen findet sich beispielsweise bei M. W. Meier, D. H. Olson, Ch. Baerlocher "Atlas of Zeolite Structure Types", 4. Auflage, Elsevier, London 1996, S. 9 bis 229.

Zum Ausgleich der negativen Elektrovalenz, die durch den Einbau von Al(III)- in das Si(IV)-Silikatgitter entsteht, findet man bei Zeolithen austauschfähige Kationen; insbesondere kann es sich dabei je nach Herstellverfahren um Kationen des Natriums, Kaliums, Lithiums oder Cäsiums handeln. Ersetzt man diese Kationen gegen Protonen, beispielsweise durch einen Ionenaustausch, so erhält man die entsprechend aziden Festkörper mit Zeolithstruktur, die sogenannte H-Form.

Es sind nun auch Zeolithe bekannt, die kein Aluminium enthalten und bei denen im Silikatgitter an Stelle des Si(IV) teilweise Titan als Ti(IV) steht. Diese Titanzeolithe, insbesondere solche mit einer Kristallstruktur vom MFI-Typ, sowie Möglichkeiten zu Ihrer Herstellung sind beschrieben, beispielsweise in der EP-A 0 311 983 oder EP-A 405 978. Außer Silicium und Titan können solche Materialien auch zusätzliche Elemente wie z. B. Aluminium, Zirkonium, Zinn, Eisen, Kobalt, Nickel, Gallium, Bor oder geringe Menge an Fluor enthalten. In den im erfindungsgemäßen Verfahren verwendeten Zeolith-Katalysatoren kann das Titan des Zeoliths teilweise oder vollständig durch Vanadium, Zirkonium, Chrom oder Niob oder ein Gemisch aus zwei oder mehr davon ersetzt sein. Das molare Verhältnis von Titan und/oder Vanadium, Zirkonium, Chrom oder Niob zur Summe aus Silicium und Titan und/oder Vanadium und/oder Zirkonium, und/oder Chrom und/oder Niob liegt in der Regel im Bereich von 0,01 : 1 bis 0,1 : µ1.

Titanzeolithe sind dafür bekannt, daß sie über ein bestimmtes Muster bei der Bestimmung der Röntgenbeugungsaufnahmen, sowie zusätzlich über eine Gerüstschwingungsbande im Infrarot-Bereich bei etwa 960 cm⁻¹ identifiziert werden können und sich damit von Alkalititanaten oder kristallinen oder amorphen TiO₂-Phasen unterscheiden.

Von Titanzeolithen mit MFI-Struktur ist bekannt, daß sie sich als Katalysatoren für Oxidationsreaktionen eignen. So ist beispielsweise aus EP-A 0 100 118 und EP-A 0 100 119 ein Verfahren bekannt, wonach Propen in wäßriger Phase mit Wasserstoffperoxid an Titanzeolithen zu Propylenoxid epoxidiert werden kann. Die Herstellung von Cyclohexanonoxim aus Cyclohexanon durch Umsetzung mit Ammoniak und Wasserstoffperoxid wird in der EP-A 0 208 311 beschrieben. Weitere Reaktionen unter Verwendung derartiger Katalysatoren, wie die Hydroxylierung von Aromaten und die Oxidation gesättigter C₂- bis C₁₈-Kohlenwasserstoffe mit H₂O₂ sind aus der GB-A 2116974 bzw. der EP-A 0 376 453 bekannt.

Typischerweise stellt man die vorgenannten Titanzeolithe dadurch her, daß man ein wäßriges Gemisch aus einer SiO₂-Quelle, einem Titanoxid und einer stickstoffhaltigen organischen Base, wie z.B. Tetrapropylammoniumhydroxid, gegebenenfalls noch in Gegenwart von Alkalilauge in einem Druckbehälter unter erhöhter Temperatur mehrere Stunden oder wenige Tage lang umsetzt, wobei ein kristallines Produkt erhalten wird. Dieses wird in der Regel abfiltriert, gewaschen, getrocknet und zur Entfernung der stickstoffhaltigen organischen Base bei erhöhter Temperatur calciniert. In dem so erhaltenen Pulver liegt das Titan zumindest teilweise innerhalb des Zeolithgerüsts in wechselnden Anteilen mit vier-, fünf- oder sechsfacher Koordination vor (Behrens et al., J. Chem. Soc., Chem. Commun. 1991, S. 678 - 680). Zur Verbesserung des katalytischen Verhaltens kann sich daran noch eine mehrmalige Waschbehandlung mit schwefelsaurer Wasserstoffperoxidlösung anschließen, wonach anschließend das Titanzeolith-Pulver erneut getrocknet und gebrannt werden muß, wie es etwa in der EP-A 0 276 362 beschrieben wird. Der so erhaltene pulverförmige Titanzeolith muß nun abschließend unter Zusatz von geeigneten Bindemitteln in einem Formgebungsschritt verarbeitet werden, um ihn als Katalysator in einer handhabbaren Form verfügbar zu machen. Eine Methode hierzu wird in der EP-A 0 200 260 beschrieben.

Die oben beschriebene Kristallisation des Titanzeolithen aus geeigneten Ausgangsstoffen durch hydrothermale Umsetzung wird im allgemeinen bei Temperaturen von 50 bis 250 °C über einen ausreichend langen Zeitraum durchgeführt, wobei sich temperaturbedingt ein autogener Druck einstellt.

Nach der Kristallisation stellt sich das Problem, den erwünschten kristallinen Feststoff, mit Partikelgrößen von in der Regel deutlich kleiner 1 µm, aus der stark alkalischen, noch organisches Templat enthaltenden Mutterlauge abtrennen zu müssen. Die EP-A 0 893 158 beschreibt dazu in den Ausführungsbeispielen entweder die Abtrennung durch herkömmliches Zentrifugieren und anschließendes Waschen des Feststoffs oder aber den Zusatz von Flockungshilfsmitteln mit einer anschließenden Zentrifugation. Die anschließende Trocknung wird gemäß dieser Druckschrift durch Sprühtrocknung oder Wirbelschicht-Sprühgranulationstrocknung durchgeführt. Sowohl die Abtrennung des Zeoliths aus der bei der Kristallisation erhaltenen Suspension als auch der Zusatz von Flockungshilfsmitteln stellt eine zusätzliche Verfahrensstufe dar, die zeitaufwendig und kostenintensiv ist.

Der vorliegenden Erfindung lag nunmehr die Aufgabe zugrunde, ein Verfahren zur Herstellung eines kristallinen, mindestens ein zeolithisches Material umfassenden Feststoffes bereitzustellen, das die zuvor genannten Nachteile nicht aufweist und insbesondere ohne zusätzliche Zwischenschritte zwischen Kristallisation und Trocknung auskommt.

Demgemäß betrifft die vorliegende Erfindung ein Verfahren zur Herstellung eines kristallinen Feststoffes, umfassend mindestens ein zeolithisches Material, bei dem der Feststoff aus mindestens einer Vorläuferverbindung kristallisiert wird und der Reaktionsaustrag der Kristallisation direkt einer Trocknung zugeführt wird. Der Begriff "direkt" bedeutet hier, daß zwischen Kristallisation und Trocknung keine Abtrennung irgendwelcher Bestandteile erfolgt, vorzugsweise das Produkt der Kristallisation ohne weitere Zwischenstufe der Trocknung zugeführt wird.

Die erfindungsgemäße Trocknung erfolgt vorzugsweise mittels einer Sprühtrocknung oder einer Wirbelschicht-Sprühgranulationstrocknung, die jeweils kontinuierlich oder diskontinuierlich durchgeführt werden kann. Die Trocknung wird unter Einhaltung einer Temperatur im Bereich von 100 bis 350 °C, vorzugsweise 100 bis 250 °C unter Einhaltung der verfahrenstechnisch gebotenen Sicherheitsbedingungen soweit getrocknet, daß ein freifließendes Pulver erhalten wird. Vorzugsweise wird die Trocknung in einer Atmosphäre durchgeführt, die Sauerstoff und mindestens ein Inertgas umfaßt. Vorzugsweise wird diese Atmosphäre als Trägergasstrom im Kreis gefahren. Als Inertgas können alle üblichen Inertgase, wie z.B. Stickstoff, Kohlenmonoxid, Kohlendioxid, Helium sowie Argon oder Gemische aus zwei oder mehr davon, verwendet werden. Der Sauerstoffgehalt der Atmosphäre beträgt vorzugsweise weniger als 10 Vol.-%, weiter bevorzugt weniger als 5 Vol.-%. Ferner kann als Inertgas ein Rauchgasgemisch mit einem COₓ-Gehalt, der sicherstellt, daß es keine Explosionsprobleme gibt, verwendet werden, wobei ein derartiges Rauchgasgemisch durch Erdgas-Verbrennung zur Rauchgas-Erzeugung gewonnen werden kann und dabei gleichzeitig Energie für die energieintensiven Stufen des Verfahrens gewonnen werden kann.

Dabei ist es im Rahmen der erfindungsgemäßen Trocknung essentiell, daß die Atmosphäre, insbesondere hinsichtlich des Sauerstoffgehaltes, so eingestellt wird, daß sicher außerhalb der Explosionsgrenzen gearbeitet wird.

Sofern die eingangs beschriebene Kristallisation in Gegenwart einer Templatverbindung durchgeführt wird, kann diese auf der im kristallinen Feststoff als Trockengut gegebenenfalls noch anhaftende Templatverbindung in einem nachgeschalteten Schritt mittels einer vorzugsweise wäßrigen Waschlösung abgelöst und in den Kristallisationsschritt zurückgeführt werden. Der Hauptteil des Templats wird jedoch bereits im Rahmen der Trocknung des Reaktionsaustrags entfernt, wobei die sich dann im Trägergasstrom befindlichen kondensierbaren Templatverbindungen auskondensiert werden.

Somit betrifft die vorliegende Erfindung auch ein integriertes Verfahren zur Herstellung eines kristallinen Feststoffes, umfassend mindestens ein zeolithisches Material, in dem
(i) der Feststoff aus mindestens einer Vorläuferverbindung in Anwesenheit mindestens einer Templatverbindung kontinuierlich kristallisiert wird,
(ii) der Reaktionsaustrag aus der Kristallisation kontinuierlich sprühgetrocknet wird, wobei vor der Trocknung kein Bestandteil des Reaktionsaustrages der Kristallisation abgetrennt wird,
(iii) die Trocknung in einer Atmosphäre, umfassend Sauerstoff, vorzugsweise weniger als 10 Vol.-% Sauerstoff, und mindestens ein Inertgas, durchgerührt wird, wobei diese Atmosphäre als Trägergasstrom in Kreisfahrweise geführt wird,
(iv) aus dem Trägergasstrom nach Kontakt des Stromes mit dem zu trocknenden Reaktionsaustrag kondensierbare Templatverbindungen auskondensiert werden und in (i) rückgeführt werden,
(v) der sprühgetrocknete kristalline Feststoff aus (ii) einem kontinuierlichen Waschprozeß unterworfen wird, in dem Templatverbindungen, die von dem kristallinen Feststoff umfaßt werden, abgetrennt und in (i) rückgeführt werden, und
(vi) der aus (v) erhaltene kristalline Feststoff calciniert wird, wobei die dabei durch Abbrand der restlichen Menge an Templatverbindungen freiwerdende Energie in (i) rückgeführt wird.

Zusätzlich können selbstverständlich dem Reaktionsaustrag vor dem Trocknen noch Zuschlagsstoffe zugesetzt werden, die der Binderung, d.h. der mechanischen Stabilität des Sprühguts oder der Dotierung des Sprühgutes mit katalytisch aktiven Komponenten dienen, wobei hier die Aufbringung von Metallen zur Verwendung des resultierenden Feststoffs als Oxidationskatalysator gemäß DE-A 44 25 672 erwähnt werden soll.

Bezüglich der nach dem erfindungsgemäßen Verfahren getrockneten bzw. hergestellten kristallinen Feststoffe, die mindestens ein zeolithisches Material umfassen, existieren keinerlei Beschränkungen. Dabei sind im einzelnen die folgenden Zeolithe zu nennen.

Vorzugsweise werden Ti-, Ge-, Te-, Ta-, V-, Cr-, Nb-, Zr-Zeolithe und insbesondere Ti-Zeolithe, eingesetzt.

Dabei sind im einzelnen Ti-, Ge-, Te-, Ta-, V-, Cr-, Nb- oder Zr-Zeolithe des Strukturtyps ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MEI, MEL, MEP, MER, MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WEI, WEN, YUG, ZON sowie ITQ-4 oder einer Mischstruktur aus zwei oder mehr dieser Strukturen oder ein Gemisch aus zwei oder mehr dieser Zeolithe, wobei wiederum die mit MFI-Struktur, BEA-Struktur, MEL-Struktur, ITQ-4 bzw. MFI/MEL-Mischstruktur als besonders bevorzugt anzusehen sind. Zeolithe dieses Typs sind beispielsweise in der oben erwähnten Literaturstelle von W. M. Meier et al. beschrieben.

Als besonders bevorzugte Katalysatoren sind im einzelnen die Ti-enthaltenden Zeolith-Katalysatoren, die im allgemeinen als "TS-1", "TS-2", "TS-3", "ZSM-48" und "ZSM-12", jeweils mit Ti, TTM-1, Ti-RUT, Ti-MCM-35, titanhaltige Zeolithe des Typs "UTD-1", "CIT-5", "CIT-1" und "SSZ-24" sowie Ti-Zeolithe mit einer zu Zeolith-beta-isomorphen Gerüststruktur zu nennen.

Zum Beispiel werden Titanzeolithe eingesetzt, wie sie beispielsweise aus der US 3 329 481 bekannt sind. Bei derartigen Titanzeolithen wird ein Teil des ursprünglich im Silicatgitter vorhandenem Si(IV) durch Titan als Ti(IV) ersetzt.

Weitere Titanzeolithe, insbesondere solche mit einer Kristallstruktur MFI-Typ sowie Möglichkeiten zu ihrer Herstellung sind u.a. in der US 4 410 501, EP-A 0 311 983, US 4 666 692, DE-A 3 047 798 oder in der BE 1 001 038 beschrieben, deren diesbezüglicher Inhalt vollumfänglich in den Kontext der vorliegenden Anmeldung einbezogen wird. Weitere im Rahmen der vorliegenden Erfindung gut einsetzbare titanhaltige Zeolithe, die eine von der MFI-Struktur verschiedene Struktur aufweisen, sind beispielsweise in der EP-A 0 405 978 beschrieben. Außer Silicium und Titan können derartige Zeolithe auch zusätzliche Elemente wie Aluminium (beschrieben u.a. in der DE-A 31 41 283), Gallium (EP-A 0 266 825), Bor (US 4 666 692) oder geringe Mengen an Fluor (EP-A 0 292 363) enthalten. Bezüglich der dort beschriebenen Zeolithe wird auch der Inhalt der vorstehend beschriebenen Druckschriften vollumfänglich in den Kontext der vorliegenden Anmeldung einbezogen.

Weitere im Rahmen des Verfahrens der vorliegenden Erfindung verwendbare Zeolith-Katalysatoren sind u. a. in US-A 5 430 000 und WO 94/29408 beschrieben, deren Inhalt diesbezüglich unter Bezugnahme in die vorliegende Anmeldung einbezogen wird.

Als weitere titanhaltige Zeolithe sind solche mit der Struktur des Ferrierits oder β-Zeolith und des Mordenits zu nennen.

### Ferner lassen sich im erfindungsgemäßen Verfahren folgende Zeolith-Katalysatoren verwenden:

Katalysatoren mit Zeolith-Struktur, wie sie in der DE-A 196 23 611.8 beschrieben sind, die hiermit bzgl. der darin beschriebenen Katalysatoren vollumfänglich in den Kontext der vorliegenden Anmeldung durch Bezugnahme aufgenommen wird.

Dabei handelt es sich um Oxidationskatalysatoren auf der Basis von Titan- oder Vanadiumsilikaten mit Zeolith-Struktur, wobei bzgl. der Zeolith-Struktur auf die vorstehend als bevorzugt angegebenen Strukturen verwiesen wird. Diese Katalysatoren sind dadurch gekennzeichnet, daß sie, wie in obiger Anmeldung detailliert beschrieben, durch verfestigende Formgebungsprozesse geformt werden.

Ferner können Oxidationskatalysatoren auf der Basis von Titan- oder Vanadiumsilikaten mit Zeolith-Struktur mit einem Gehalt von 0,01 bis 30 Gew.-% an einem oder mehreren Edelmetallen aus der Gruppe Ruthenium, Rhodium, Palladium, Osmium, Iridium, Platin, Rhenium, Gold und Silber, die ebenfalls dadurch gekennzeichnet sind, daß sie durch verfestigende Formgebungsprozesse geformt worden sind, verwendet werden. Derartige Katalysatoren sind in der DE-A 196 23 609.6 beschrieben, die hiermit bzgl. der darin beschriebenen Katalysatoren vollumfänglich in den Kontext der vorliegenden Anmeldung durch Bezugnahme aufgenommen wird.

Bezüglich der verfestigenden Formgebungsprozesse, der Bindemittel sowie der Hilfsmittel und der Struktur der Oxidationskatalysatoren wird auf die DE-A 196 23 611.8 Bezug genommen.

Der in der DE-A 196 23 609.6 beschriebene Oxidationskatalysator weist einen Gehalt von 0,01 bis 30 Gew.-%, insbesondere 0,05 bis 15 Gew.-%, vor allem 0,1 bis 8 Gew.-%, jeweils bezogen auf die Menge der Titan- oder Vanadium-Zeolithe, der genannten Edelmetallen auf. Hierbei wird Palladium besonders bevorzugt. Die Edelmetalle können auf den Katalysator in Form geeigneter Edelmetallkomponenten, beispielsweise in Form von wasserlöslichen Salzen, vor, während oder im Anschluß an den verfestigenden Formgebungsschritt aufgebracht werden.

### Ferner können die folgenden Katalysatoren erfindungsgemäß verwendet werden:

Ein mindestens ein poröses oxidisches Material enthaltender Formkörper, der erhältlich ist durch ein Verfahren, das die folgenden Stufen umfaßt:
(I) Versetzen eines Gemischs enthaltend ein poröses oxidisches Material oder ein Gemisch aus zwei oder mehr davon mit einer Mischung enthaltend mindestens einen Alkohol und Wasser, und
(II) Kneten, Verformen, Trocknen und Calcinieren des gemäß Stufe (I) versetzten Gemischs.

Details bezüglich dieses Katalysators sind der DE-A 197 23 751.7 zu entnehmen, die hiermit durch Bezugnahme vollumfänglich in den Kontext der vorliegenden Anmeldung aufgenommen wird.

Ferner können erfindungsgemäß Siliciumdioxid enthaltende Feststoffe, herstellbar durch ein Verfahren, das die folgende Stufe (I) umfaßt:
(I) Inkontaktbringen mindestens eines Vorläufers von Siliciumdioxid mit mindestens einem Strukturbildner in einem flüssigen Medium, dadurch gekennzeichnet, daß der Strukturbildner ein Polyethylenimin oder ein Gemisch aus zwei oder mehr davon ist,
eingesetzt werden.

Details bezüglich dieses Feststoffs sind der DE-A 197 32 865.2, deren diesbezüglicher Kontext vollumfänglich in die vorliegende Anmeldung durch Bezugnahme aufgenommen wird, zu entnehmen.

Weitere gut einsetzbare Katalysatoren stellen Formkörper dar, die einen inerten Träger und darauf aufgebracht mindestens ein Silicat, vorzugsweise ein kristallines Silicat, umfassen, erhältlich durch Aufbringen eines Gemischs enthaltend mindestens ein Silicat und mindestens einen Metallsäureester oder ein Hydrolysat davon oder eine Kombination aus Metallsäureester und Hydrolysat davon auf den inerten Träger, wie sie in der DE-A 197 54 924.1 beschrieben sind, wobei der diesbezügliche Inhalt dieser Anmeldung ebenfalls durch Bezugnahme in die vorliegenden Anmeldung aufgenommen wird.

Ferner können erfindungsgemäß Formkörper, umfassend mindestens ein Silicat und mindestens ein Metalloxid, herstellbar durch ein Verfahren, das die folgende Stufe (i) umfaßt:
(i) Vermischen des mindestens einen Silicats mit mindestens einem Metalloxidsol, das einen niedrigen Gehalt an Alkali- und Erdalkalimetallionen aufweist,
wie sie in der DE-A 198 15 879.3 beschrieben sind, verwendet werden.

Der diesbezügliche Inhalt dieser Anmeldung wird ebenfalls durch Bezugnahme in den Kontext der vorliegenden Anmeldung aufgenommen.

Ferner lassen sich erfindungsgemäß Titansilicalite mit RUT-Struktur verwenden, herstellbar durch ein Verfahren, das die Schritte (i) und (ii) umfaßt:
(i) Herstellen einer Mischung aus mindestens einer SiO₂-Quelle und mindestens einer Titan-Quelle;
(ii) Kristallisation der Mischung aus (i) in einem Druckbehälter unter Zugabe mindestens einer Schablonenverbindung, wobei eine Suspension erhalten wird, dadurch gekennzeichnet, daß als Schablonenverbindung Amine oder Ammoniumsalze eingesetzt werden, die zur Stabilisierung von Käfigen der Silicatstruktur [4⁴5⁴6²] und [4⁴5⁶6⁵8¹] geeignet sind.

Details bezüglich dieser Katalysatoren lassen sich der DE-A 198 39 792.5 entnehmen.

Darüber hinaus lassen sich erfindungsgemäß die in der DE-A 198 47 630.2 beschriebenen Siliciumdioxide mit Meso- und Mikroporen verwenden, die vorzugsweise ein oder mehrere der folgenden Merkmale (i) bis (iii) aufweisen:
(i) Eine Summe der spezifischen Oberflächen der Meso- und Mikroporen von mindestens 200 m²/g;
(ii) eine Summe der Porenvolumen der Meso- und Mikroporen von mindestens 0,2 ml/g;
(iii) ein Maximum der Porendurchmesserverteilung der Mesoporen bei mindestens 3 nm.

Weitere Details bezüglich dieser Katalysatoren lassen sich der oben erwähnten Anmeldung entnehmen, deren diesbezüglicher Kontext vollumfänglich durch Bezugnahme in die vorliegende Anmeldung aufgenommen wird.

Wie eingangs erwähnt, können die nach dem erfindungsgemäßen Verfahren hergestellten Zeolith-haltigen kristallinen Feststoffe in üblicher Weise als Katalysatoren, Trägermaterialien für Katalysatoren, Sorptionsmittel, als Pigment oder als Füllstoff für Kunststoffe eingesetzt werden, wobei insbesondere die Verwendung zur Herstellung von Alkylenoxiden ausgehend von Alkenen unter Verwendung eines Hydroperoxids, insbesondere zur Herstellung von Propylenoxid durch Umsetzung von Propen mit H₂O₂, zu nennen ist.

Die vorliegende Erfindung soll nunmehr anhand eines Beispiels erläutert werden.

### BEISPIEL

In einem rührbaren Stahldruckbehälter wurden 11,98 kg Tetraethoxysilan, 240 g Tetraethylorthotitanat und eine Mischung aus 7,06 kg Tetrapropylammoniumhydroxid (40 Gew.-% in Wasser) in 10,54 kg deionisiertem Wasser gemischt und eine Stunde bei Raumtemperatur homogenisiert. Der dabei gebildete Alkohol wurde abdestilliert, der Rückstand mit 18,1 kg Wasser aufgefüllt und innerhalb von 24 Stunden bei 175 °C unter Rühren kristallisiert.

Das Kristallisationsprodukt wurde ohne weitere Trenn- oder Reinigungsschritte über eine Rohrleitung in einen Sprühtrockner (Fa. Niro) überführt und in einem Mengenstrom von 3 1/h über eine Düse versprüht. Die Eingangstemperatur betrug 230 °C bei einer Austrittstemperatur von 110 bis 120 °C. Als Trägergas wurde Stickstoff mit 2 Vol.-% Sauerstoff eingesetzt. Die Trocknungsgasmenge betrug 70 Nm³/h, wobei das Trocknungsgas mit dem Abgas auf 110 °C vorgeheizt wurde.

Auf eingesetztes SiO₂ bezogen, lag die Ausbeute an SiO₂ im Titanzeolith über die integrierten Schritte der Kristallisation und Sprühtrocknung bei 94 %.

### Die vorliegende Erfindung betrifft folgende Ausführungsformen:

1. Verfahren zur Herstellung eines kristallinen Feststoffes, umfassend mindestens ein zeolithisches Material, bei dem der Feststoff aus mindestens einer Vorläuferverbindung kristallisiert wird und der Reaktionsaustrag der Kristallisation direkt einer Trocknung zugeführt wird.
2. Verfahren nach Ausführungsform 1, dadurch gekennzeichnet, daß die Trocknung eine Sprühtrocknung ist.
3. Verfahren nach Ausführungsform 1 oder 2, dadurch gekennzeichnet, daß die Trocknung in einer Atmosphäre, umfassend Sauerstoff, vorzugsweise weniger als 10 Vol.-% Sauerstoff, und mindestens ein Inertgas, durchgeführt wird.
4. Verfahren nach einer der Ausführungsformen 1 bis 3, dadurch gekennzeichnet, daß die Kristallisation in Anwesenheit mindestens einer Templatverbindung durchgeführt wird.
5. Verfahren nach Ausführungsform 4, dadurch gekennzeichnet, daß nach Kontakt der Atmosphäre in Form eines Trägergasstroms mit dem zu trocknenden Reaktionsaustrag sich im Strom befindliche kondensierbare Templatverbindungem auskondensiert werden.
6. Verfahren nach Ausführungsform 4 oder 5, dadurch gekennzeichnet, daß Templatverbindungen, die vom getrockneten kristallinen Feststoff umfaßt werden, mittels mindestens eines Waschprozesses von dem Feststoff abgetrennt werden.
7. Kristalliner Feststoff, herstellbar durch ein Verfahren gemäß einer der Ausführungsformen 1 bis 6, dadurch gekennzeichnet, daß das zeolithische Material ein Ti-, Ge-, Te-, Ta-, V-, Cr-, Nb- oder Zr-Zeolith des Strukturtyps ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BlK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MEI, MEL, MEP, MER, MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WEI, WEN, YUG, ZON sowie ITQ-4 oder einer Mischstruktur aus zwei oder mehr dieser Strukturen oder ein Gemisch aus zwei oder mehr dieser Zeolithe ist.
8. Feststoff nach Ausführungsform 7, dadurch gekennzeichnet, daß das zeolithische Material mindestens ein Element, ausgewählt aus der Gruppe bestehend aus Aluminium, Titan, Bor, Eisen, Gallium, Vanadium, Zirkon, Zink, Zinn, Tellur, Germanium, Seltenerd-Metallen und einem Gemisch aus zwei oder mehr davon, und/oder mindestens ein Element, ausgewählt aus der Gruppe bestehend aus Natrium, Kalium, Magnesium, Calcium, Metallen der Gruppen Ib, IIb, VIIIa, und einem Gemisch aus zwei oder mehr davon, umfaßt.
9. Verwendung eines Feststoffes, herstellbar gemäß einer der Ausführungsformen 1 bis 6, oder eines Feststoffes gemäß Ausführungsform 7 oder 8 als Katalysator, als Trägermaterial für einen Katalysator, als Sorptionsmittel, als Pigment oder als Füllstoff für Kunststoffe.
10. Integriertes Verfahren zur Herstellung eines kristallinen Feststoffes, umfassend mindestens ein zeolithisches Material, in dem
   (i) der Feststoff aus mindestens einer Vorläuferverbindung in Anwesenheit mindestens einer Templatverbindung kontinuierlich kristallisiert wird,
   (ii) der Reaktionsaustrag aus der Kristallisation kontinuierlich sprühgetrocknet wird, wobei vor der Trocknung kein Bestandteil des Reaktionsaustrages der Kristallisation abgetrennt wird,
   (iii) die Trocknung in einer Atmosphäre, umfassend Sauerstoff, vorzugsweise weniger als 10 Vol.-% Sauerstoff, und mindestens ein Inertgas, durchgeführt wird, wobei diese Atmosphäre als Trägergasstrom in Kreisfahrweise geführt wird,
   (iv) aus dem Trägergasstrom nach Kontakt des Stromes mit dem zu trocknenden Reaktionsaustrag kondensierbare Templatverbindungen auskondensiert werden und in (i) rückgeführt werden,
   (v) der sprühgetrocknete kristalline Feststoff aus (ii) einem kontinuierlichem Waschprozeß unterworfen wird, in dem Templatverbindungen, die von dem kristallinen Feststoff umfaßt werden, abgetrennt und in (i) rückgeführt werden, und
   (vi) der aus (v) erhaltene kristalline Feststoff calciniert wird, wobei die dabei durch Abbrand der restlichen Menge an Templatverbindungen frei werdende Energie in (i) rückgeführt wird.

## Patentansprüche

1. Kristalliner Feststoff, umfassend mindestens ein zeolithisches Material, herstellbar durch ein Verfahren, bei dem der Feststoff aus mindestens einer Vorläuferverbindung kristallisiert wird und der Reaktionsaustrag der Kristallisation direkt einer Trocknung zugeführt wird, wobei die Trocknung eine Sprühtrocknung ist und in einer Atmosphäre, umfassend Sauerstoff und mindestens ein Inertgas, durchgeführt wird, wobei der Sauerstoffgehalt der Atmosphäre weniger als 10 Vol.-% beträgt und wobei das mindestens eine zeolithische Material ein Ti-Zeolith des Strukturtyps ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MEI, MEL, MEP, MER, MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WEI, WEN, YUG, ZON sowie ITQ-4 oder einer Mischstruktur aus zwei oder mehr dieser Strukturen oder ein Gemisch aus zwei oder mehr dieser Zeolithe ist.

2. Feststoff nach Anspruch 1, wobei das zeolithische Material mindestens ein Element, ausgewählt aus der Gruppe bestehend aus Aluminium, Titan, Bor, Eisen, Gallium, Vanadium, Zirkon, Zink, Zinn, Tellur, Germanium, Seltenerd-Metallen und einem Gemisch aus zwei oder mehr davon, und/oder mindestens ein Element, ausgewählt aus der Gruppe bestehend aus Natrium, Kalium, Magnesium, Calcium, Metallen der Gruppen Ib, IIb, VIIIa, und einem Gemisch aus zwei oder mehr davon, umfasst.

3. Feststoff nach Anspruch 1 oder 2, wobei das zeolithische Material ein Titanzeolith mit MFI-Struktur, BEA-Struktur, MEL-Struktur, ITQ-4-Struktur oder MFI/MEL-Mischstruktur ist.

4. Feststoff nach einem der Ansprüche 1 bis 3, wobei das zeolithische Material ein Ti-Zeolith des Strukturtyps MFI ist.

5. Feststoff nach einem der Ansprüche 1 bis 4, wobei der Sauerstoffgehalt der Atmosphäre weniger als 5 Vol.-% beträgt.

6. Feststoff nach einem der Ansprüche 1 bis 5, wobei die Trocknung unter Einhaltung einer Temperatur von 100 bis 350 °C, vorzugsweise 100 bis 250 °C, und unter Erhalt eines frei fließenden Pulvers durchgeführt wird.

7. Feststoff nach einem der Ansprüche 1 bis 6, wobei die Kristallisation in Anwesenheit mindestens einer Templatverbindung durchgeführt wird.

8. Feststoff nach Anspruch 7, wobei nach Kontakt der Atmosphäre in Form eines Trägergasstroms mit dem zu trocknenden Reaktionsaustrag sich im Strom befindliche kondensierbare Templatverbindungen auskondensiert werden und/oder wobei Templatverbindungen, die vom getrockneten kristallinen Feststoff umfasst werden, mittels mindestens eines Waschprozesses von dem Feststoff abgetrennt werden.

9. Verwendung eines kristallinen Feststoffes gemäß einem der Ansprüche 1 bis 8 als Katalysator, als Trägermaterial für einen Katalysator, als Sorptionsmittel, als Pigment oder als Füllstoff für Kunststoffe.

10. Verwendung nach Anspruch 9, wobei der Feststoff zur Herstellung von Alkylenoxiden ausgehend von Alkenen, bevorzugt zur Herstellung von Propylenoxid durch Umsetzung von Propen mit H₂O₂ eingesetzt wird.
